# EUROPÄISCHE PATENTSCHRIFT

(11) **EP 0 653 473 B1**
(45) Veröffentlichungstag und Bekanntmachung des Hinweises auf die Patenterteilung: **04.08.1999**
(21) Anmeldenummer: 94117753.7
(22) Anmeldetag: 10.11.1994
(51) Int. Cl.: C09K 3/00, C10M 173/02

(54) **Verfahren zum Einbringen von Durchbrechungen in Hohlraumdecken**
Method for providing openings in hollow ceilings
Procédé de réalisation d'ouverture dans des plafonds creux

(30) Priorität: 11.11.1993 DE 4338544
(43) Veröffentlichungstag der Anmeldung: 17.05.1995
(73) Patentinhaber: Wiemeler, Walter H. Maria, D-48308 Senden (DE)
(72) Erfinder: Wiemeler, Walter H. Maria, D-48308 Senden (DE)
(74) Vertreter: Hoffmeister, Helmut, Dr. Dipl.-Phys.

(56) Entgegenhaltungen:
- EP-A- 0 260 538
- WO-A-92/13602
- DE-A- 3 742 572
- SPEKTRUM DER WISSENSCHAFT, Nr.10, Oktober 1990 Seiten 60 - 70 EMMERMANN, R. 'Vorstoss ins Erdinnere: das Kontinentale Tiefbohrprogramm'

## Beschreibung

Die Erfindung betrifft ein Verfahren zum Einbringen von Durchbrechungen durch Bohren oder Sägen in Hohlraumdecken oder -wänden aus Beton, Stein, Keramik oder dergleichen, unter Verwendung eines mit einem durch ein fluidisches Kühlmittel zu kühlendem Bohr- oder Sägeelementes.

Das Einbringen von Durchbrechungen (Wand- oder Bodenöffnungen) in hohlen Decken oder Wänden ist bekannt (vgl. Fig. auf Seite 6 der "Techn. Information Hohlraumboden NORINA der Fa. Mainbau Estrich-Fußboden GmbH, 1985"). Große Durchbrechungen werden mit Hilfe eines Bohrkranzes staubfrei gebohrt. Dies macht allerdings den Einsatz eines flüssigen Kühlmittels erforderlich, das sowohl die Schneide des Bohrkranzes kühlt als auch das entstandene Bohrmehl ständig abführt. Als solches Kühlmittel kommt im allgemeinen Wasser zum Einsatz. Wird mit einem derartigen Schneidkranz jedoch eine Bohrung in eine Hohlraumdecke oder Hohlwand eingebracht, so fließt das Kühlwasser nach dem Durchstoßen in den darunter- oder danebenliegenden Hohlraum ab. Das Kühlwasser kann diverse Wasserschäden anrichten. Im einfachsten Falle sind dies Durchfeuchtungen. Bei Installationsdecken können jedoch auch Kurzschlüsse und Kriechströme sowie Korrosionen mit allen erdenklichen Folgeschäden für spezielle Anlagen, wie Rechner-, Röntgen-, Steuer-Anlagen oder dergleichen, auftreten.

Der Erfindung liegt deshalb die Aufgabe zugrunde, ein Verfahren zum Einbringen von Durchbrechungen in Hohlraumdecken oder -wänden anzugeben, bei dem die Kühlung des Bohrelementes im wesentlichen ohne Folgeschäden der vorgenannten Art durchführbar ist.

Erfindungsgemäß wird die Aufgabe dadurch gelöst, daß als Kühlmittel ein Wasser mit einem darin gelösten Thixotropiermittel verwendet wird, das in Wasser in einer derartigen Menge enthalten ist, daß die Lösung sich thixotropisch verhält.

"Thixotropiermittel" ist die Bezeichnung für ein Präparat, das die unerwünschte Hautbildung bei streichfertigen Anstrichstoffen während der Lagerung und das Abtropfen der Anstrichstoffe beim Streichen verhindern soll. Es hat darüber hinaus die Eigenschaft, bei Lösung in Wasser, dieses bei Stillstand in eine gallertartige thixotrope Masse zu verwandeln. "Thixotropie" ist die Erscheinung, das Gele sich bei Einwirkung mechanischer Kräfte, z.B. beim Rühren, Schütteln oder Fließen unter Druck verflüssigen, nach Aufhören der mechanischen Beanspruchung aber wieder verfestigen. In neuerer Zeit sind auf silikatischer Basis Thixotropiermittel entwickelt worden, die schon bei geringem Zusatz zu einer wäßrigen Lösung einen hohen Thixotropie-Effekt ergeben, der sich darin zeigt, daß schon nach einer Ruhezeit von wenigen Sekunden die Lösung zu einem Gel erstarrt und sich schon bei Anwendung geringer Scherkräfte das Gel wieder verflüssigen läßt.

Im vorliegenden Falle ergibt sich bei der Verwendung eines Thixotropiermittels der Vorteil, daß das entstehende silicatische Bohrmehl zusätzlich diese thixotropischen Eigenschaften verbessert, so daß nach dem Bohrvorgang eine nicht mehr zerfließende, gallertartige Masse aus dem Kühlmittel entsteht, die nach und nach durch Abtrocknen des enthaltenen Wassers zu Pulver wird.

Ein solches thixotropierendes Kühlmittel hat den Vorteil, daß nach dem Durchstoßen des oberen Deckenkörpers es nicht frei in einem zumeist unzugänglichen Hohlraum umherfließt, sondern vielmehr unterhalb eines Bohrlochs zu einem Gel erstarrt. Trotzdem läßt sich das Kühlmittel bei entsprechender Zumischung eines Thixotropiermittels flüssig genau dosiert an die erforderliche Stelle im Bereich eines Bohrkranzes bringen.

Wesentlich ist, daß das als Gel oder gelartige Masse zusammengehaltene Kühlmittel sich in dem freien Hohlraum nicht mehr verteilt oder Verschmutzungen oder Durchfeuchtungen an der Außenfläche erzeugt. Hierdurch werden weitgehend Kurzschlüsse oder Kriechströme an elektrischen Leitungen oder Einrichtungen vermieden.

Der Begriff "Decke" und "Wand" ist dabei als gleichartig anzusehen, d.h. das Kühlmittel kann auch beim Einbringen von entsprechenden Durchbrechungen in Hohlwänden oder Wandbohrungen eingesetzt werden. Ebenso ist der Begriff "Bohren" und "Sägen" als gleichwertig anzusehen, d.h. das Wände oder Decken unter Verwendung von Kühlmittel gebohrt oder gesägt werden können.

Bei der Auswahl des Thixotropiermittels kommt es wesentlich darauf an, daß das zugesetzte Mittel eine ausreichende Thixotropie des Kühlmittels erzeugt, ohne das das Fließverhalten im Bereich des Kontaktes von Werkzeug und zu bearbeitender Fläche die Kühlung verschlechtert.

Unter diesen Bedingungen lassen sich verschiedene Thixotropiermittel angeben, beispielsweise solche auf Guajakol, Hydrochinon, Phenolderivat-, Silicat- oder Oxime-Basis.

Überraschenderweise wurde gefunden, daß vorzugsweise das Produkt Dehydril* HT (* = Warenzeichen der Firma Henkel KGaG, Düsseldorf,) in einem Anteil von 0,1 bis 20 Gew.%, vorzugsweise 0,4 bis 1 Gew.%, als Basis für ein wässriges Kühlmittel eingesetzt werden kann. Bei dem Produkt Dehydril HT handelt es sich um eine silicatische Verbindung, die in Pulverform handelsüblich bei der Firma Henkel KGaG, 40191 Düsseldorf, bezogen werden kann. Es ist hoch-thixotropierend.

Wird dieses Thixotropiermittel in entsprechender Menge in Wasser gelöst, so ergeben sich vorzügliche Kühl- und Thixotropie-Eigenschaften. Das Mittel Dehydril HT bildet eine extrem thixotropische Flüssigkeit, die schon bei Anwendung leichter Scherkraft wieder in die flüssige Phase zurückkehrt, jedoch nach kurzem Stehenbleiben ein fließfestes Gel bildet.

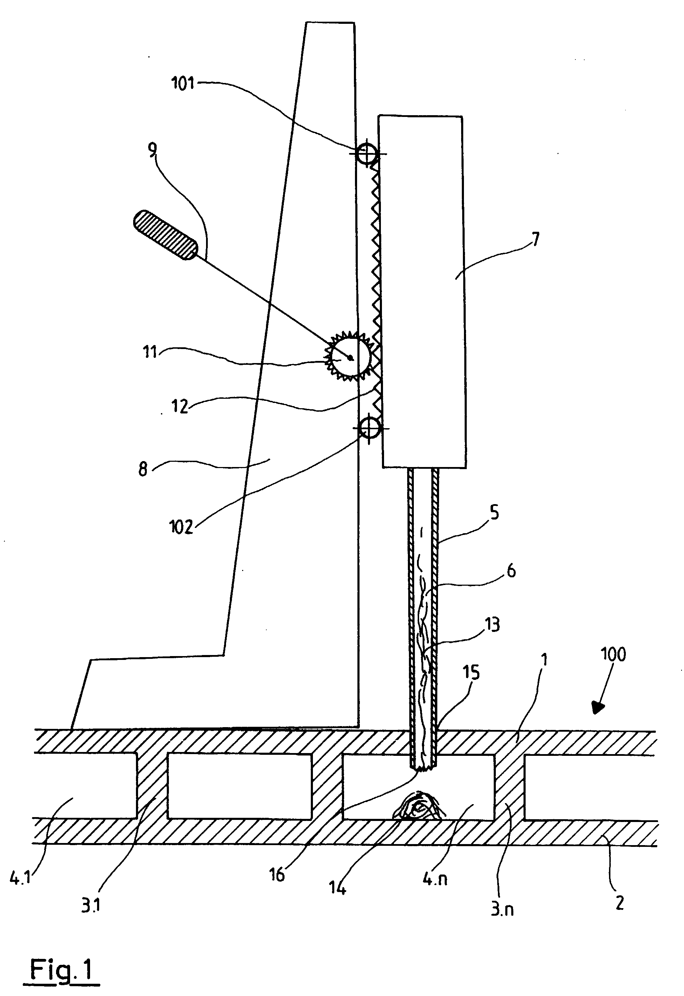

Anhand einer Figur wird ein Beispiel im folgenden näher beschrieben. Die Figur zeigt eine Bohreinrichtung zum Einbringen von Durchbrechungen in eine Hohlraumdecke in einer schematischen, teilweise geschnittenen Darstellung.

In der Figur ist eine Hohlraumdecke 100 dargestellt. Sie besteht aus einem oberen Deckenkörper 1, einem unteren Deckenkörper 2 und zwischen diesen liegenden Versteifungskörpern 3.1, ..., 3.n. Die Versteifungskörper 3.1, ..., 3.n teilen so Hohlräume 4.1, ..., 4.n ab.

In eine so ausgebildete Hohlraumdecke 100 soll von oben eine Durchbrechung 15 eingebracht werden. Hierzu wird eine spezielle Bohrmaschine 7 eingesetzt. Die Bohrmaschine 7 besitzt eine Standeinrichtung 8. Damit die Bohrmaschine 7 an der Standeinrichtung 8 bewegbar geführt werden kann, sind insbesondere ein Verstellhebel 9 mit einem daran angeflanschten Zahnrad 11 an der Standeinrichtung und eine Vorschubzahnung 12 und Führungsräder 10.1, 10.2 an der Bohrmaschine 7 angebracht.

Die Maschine trägt hohle Bohrwelle 5. Die Bohrwelle 5 trägt an ihrem unteren Ende einen Schneidkranz 16.

Um eine Bohrung 15 in die Hohlraumdecke 100 einzubringen, wird durch die Bohrmaschine 7 die Bohrwelle 5 mit dem Bohrkranz in Umdrehung versetzt und mit der Decke in Kontakt gebracht. Damit der Bohrkranz 16 nicht durch Überhitzung verglüht, wird über die Bohrwelle 5 ein Kühlmittel 13 unter Druck zugeführt. Das Kühlmittel stellt eine etwa 0,5 gew.%ige Lösung des silicatischen Thixotropiermittel Dehydril HT dar. Dabei können entsprechend der herrschenden Temperatur, dem pH-Wert des Wassers und den übrigen Anforderungen auch andere Anteile hinzugemischt werden, beispielsweise Anteile zwischen 0,1 bis 20 gew.% Dehydril HT. Bei Dehydril HT handelt es sich um ein thixotropierendes Silicatgemisch.

Das Kühlmittel wird dadurch hergestellt, daß pulverförmiges Dehydril HT zu 0,5 Gew.% eingerührt und zur Lösung gebracht wird.

Das Kühlmittel hat die Eigenschaft, daß es unter Druck die Eigenschaften üblichen, flüssigen Kühlwassers erfüllt, d.h. fließen und kühlen kann, den Bohrkranz spült und das Bohrmehl abtransportieren kann, und daß es beim Stillstand zu der bereits beschriebenen gallertartigen Masse erstarrt.

Wesentlich ist, daß das so gemischte Kühlmittel keine toxischen Bestandteile enthält, sich im Abwasser neutral verhält und auch keine organischen Anteile enthält, die bei längerem Stehen verderben können. Ein weiterer Vorteil ist, daß das vorgenannte Kühlmittel eine große Menge an Bohrmehl aufnehmen kann, ohne daß es seine thixotropischen Eigenschaften verliert.

Das als Kühlmittel wird von einem Behälter (nicht dargestellt) über die Bohrmaschine durch die Hohlwelle 5 an den Schneidenkranz 16 geleitet. Überschüssiges Bohrhilfsmittel 15 kann im Bereich des Schneidkranzes abgesaugt werden.

Durchstößt der Bohrkranz 5 den oberen Deckenkörper 1, so fließt das Kühlmittel durch die Decke durch, erstarrt aber nach kurzer Zeit zu einem Gel. Es fließt nicht mehr in den Hohlraum 4.n weiter, sondern verbleibt vielmehr unterhalb der Bohrwelle 5.

Hierdurch wird auch gewährleistet, daß beim weiteren Führen der Bohrwelle 5 durch den zweiten Deckenkörper 2 wiederum Kühlmittel 13 dort zur Verfügung steht.

Soll hingegen nur der obere Deckenkörper 1 durchbohrt werden, kann das angesammelte gelierte Kühlmittel abgesaugt werden.

Es ist damit möglich, Spezialbohrungen an Installationsdecken oder -wänden durchzuführen, ohne daß vagabundierendes Kühlmittel Kurzschlüsse, Korrosionen und dergleichen hervorruft.
(* = Warenzeichen der Henkel KGaG, Düsseldorf).
(* = Trade Mark of Henkel KGaG, Düsseldorf)
* = Marque déposée de la société Henkel KGaG, Düsseldorf

## Patentansprüche

1. Verfahren zum Einbringen von Durchbrechungen durch Bohren oder Sägen in Hohlraumdecken oder -wänden aus Beton, Stein, Keramik oder dergleichen, unter Verwendung eines mit einem durch ein fluidisches Kühlmittel zu kühlenden Bohr- oder Sägeelementes (6),
dadurch gekennzeichnet. daß
als Kühlmittel (13) Wasser mit einem darin gelösten Thixotropiermittel (14) verwendet wird, das im Wasser in einer derartigen Menge enthalten ist, daß die Lösung sich thixotropisch verhält.

2. Verfahren nach Anspruch 1, dadurch gekennzeichnet, daß ein Thixotropiermittel auf Silicat-Basis verwendet wird.

3. Verfahren nach Anspruch 1 und 2, dadurch gekennzeichnet, daß das Thixotropiermittel Dehydril* HT, in einer 0,1 bis 20 gew.%igen, vorzugsweise 0,4 bis 1 gew.%igen Lösung in Wasser eingesetzt wird.

## Claims

1. A method of forming through openings by drilling or sawing in cavity ceilings or walls of concrete, brick, ceramic or the like, using a drilling or sawing element (6) requiring cooling by means of a fluid coolant,
characterized in
that the coolant (13) used is water with the thixotropicising agent (14) dissolved therein in a quantity in the water such that the solution behaves thixotropically.

2. A method according to claim 1, characterized in that a silicate based thixotropicising agent is used.

3. A method according to claims 1 and 2, characterized in that the thixotropicising agent Dehydril* HT is used in a 0.1 to 20 % by weight, preferably 0.4 to 1 % by weight solution in water.

## Revendications

1. Procédé pour aménager, par perçage ou sciage, des découpés dans des plafonds ou des parois creux en béton, pierre, céramique ou analogue, en utilisant un élement de perçage ou de sciage (6) à refroidir par un fluide de refroidissement,
caractérisé en ce que
on utilise, en tant qu'agent de refroidissement (13), de l'eau dans laquelle est dissous un agent thixotrope (14) qui est contenu dans l'eau en une quantité telle que la solution se comporte de manière thixotropique.

2. Procédé selon la revendication 1 caractérisé en ce qu'on utilise un agent thixotrope à base de silicate.

3. Procédé selon les revendications 1 et 2 caractérisé en ce que l'agent thixotrope Dehydril* HT est utilisé dans une solution acqueuse avec une proportion comprise entre 0,1 et 20 % en poids, de préférence entre 0,4 et 1 % en poids.
